# DEMANDE DE BREVET EUROPEEN

(11) **EP 1 575 191 A1**
(43) Date de publication de la demande: **14.09.2005**
(21) Numéro de dépôt: 05290461.2
(22) Date de dépôt: 02.03.2005
(51) Int. Cl.: H04B 10/00, F41H 7/02

(54) **Procédé de transmission de données et dispositif mettant en oeuvre un tel procédé**

(30) Priorité: 12.03.2004 FR 0402668
(71) Demandeur: GIAT Industries, 78000 Versailles (FR)
(72) Inventeur: Laine, Loic M., 18230 Saint Doulchard (FR)
(74) Mandataire: Célanie, Christian

(57) **Abrégé**

L'invention a pour objet un procédé et un dispositif permettant la transmission de données entre un boîtier électronique de commande (4) disposé à l'intérieur d'un véhicule et un boîtier électronique commandé (3) disposé à l'extérieur du véhicule.

Ce procédé est caractérisé en ce que l'on transmet les données entre les deux boîtiers (3,4) sous la forme de signaux lumineux au travers d'au moins une paroi transparente (7).

## Description

Le domaine technique de l'invention est celui des procédés permettant la transmission de données.

Les véhicules et en particulier les véhicules terrestres militaires comportent parfois des dispositifs annexes qui sont fixés à l'extérieur du véhicule et qu'il est nécessaire de pouvoir commander à partir de l'intérieur du véhicule.

A titre d'exemple, il est fréquent d'équiper un véhicule blindé avec des moyens de déminage électromagnétiques qui sont fixés à l'avant du véhicule et à distance de la tourelle.

Les brevets FR2701105 et FR2750204 décrivent ainsi des dispositifs de déminage comprenant une ou plusieurs bobines engendrant un champ électromagnétique variable.

Ces bobines sont reliées à un boîtier électronique qui leur fournit un signal de puissance modulé en fonction de la forme du champ souhaité pour assurer le déminage.

Le boîtier électronique raccordé aux bobines doit pouvoir être piloté à distance par un opérateur situé à l'intérieur du véhicule. Il est donc nécessaire de prévoir une ligne de transmission de données entre un boîtier électronique de commande situé à l'intérieur du véhicule et le boîtier commandé associé aux bobines et qui est fixé à l'extérieur.

Cette ligne permettra au minimum d'assurer les commandes marche/arrêt du moyen de déminage et elle assurera le plus souvent l'échange de signaux de contrôle et/ou de test de l'état du moyen de déminage ainsi qu'éventuellement la transmission de signaux de programmation.

Il est relativement aisé de raccorder les boîtiers électroniques externes à une source de courant. En effet, il existe généralement sur la plupart des véhicules au moins un connecteur externe permettant un raccordement électrique de puissance.

Il est par contre plus complexe de réaliser une transmission de données. En effet, il est alors nécessaire de prévoir un câblage spécifique traversant la paroi du véhicule pour raccorder le boîtier électronique externe et le boîtier électronique interne.

La réalisation d'un tel câblage est délicate. Le blindage doit être traversé. Il en résulte une diminution de résistance du blindage et une perte d'étanchéité de l'habitacle du véhicule qui doit être le plus souvent protégé contre les agressions bactériologiques et chimiques.

Le problème du raccordement d'un boîtier électronique externe avec un boîtier électronique interne à un véhicule se rencontre également lorsque l'on équipe un véhicule donné avec des moyens de défense active, tels que des barrières de charges formées ou bien des briques explosives projetant plaques ou barreaux.

Le brevet FR2805037 décrit ainsi un dispositif de défense active projetant des barreaux pour contrer les projectiles cinétiques. Le brevet EP1004844 décrit un dispositif de défense active mettant en oeuvre des barrières de charges formées.

Ces dispositifs sont répartis autour du véhicule. Ils peuvent comporter leur propre source d'énergie mais ils doivent être tous raccordés à un boîtier électronique de commande interne au véhicule, boîtier qui est lui-même associé à une conduite de tir déterminant la direction d'attaque d'une menace.

La multiplication des dispositifs de défense active autour du véhicule rend encore plus complexe le problème de la transmission de données entre la conduite de tir interne au véhicule et les différents dispositifs de défense.

C'est le but de l'invention que de proposer un procédé de transmission de données ainsi qu'un dispositif de transmission mettant en oeuvre ce procédé et permettant de pallier de tels inconvénients.

Ainsi le procédé et le dispositif selon invention permettent d'assurer une transmission de données entre un boîtier interne à un véhicule et un boîtier externe à ce véhicule sans qu'il soit nécessaire de réaliser des perçages au travers de la paroi du véhicule.

L'intégration de différents dispositifs à l'extérieur d'un véhicule, par exemple dans le cadre d'une revalorisation, se trouve ainsi grandement facilitée.

Ainsi invention a pour objet un procédé de transmission de données entre un boîtier électronique de commande disposé à l'intérieur d'un véhicule et un boîtier électronique commandé disposé à l'extérieur du véhicule, procédé caractérisé en ce que l'on transmet les données entre les deux boîtiers sous la forme de signaux lumineux au travers d'au moins une paroi transparente.

Avantageusement, les signaux lumineux pourront être codés.

Les signaux lumineux pourront également être émis dans une bande de fréquence située en dehors du spectre visible.

L'invention a également pour objet un dispositif de transmission de données mettant en oeuvre un tel procédé, dispositif caractérisé en ce qu'il comprend au moins un premier moyen émetteur/récepteur optique relié au boîtier électronique de commande et disposé à l'intérieur du véhicule et au moins un deuxième moyen émetteur/récepteur optique relié au boîtier électronique commandé et disposé à l'extérieur du véhicule, les premier et deuxième moyens émetteurs/récepteurs optiques étant disposés l'un par rapport à l'autre de façon à pouvoir échanger leurs signaux au travers d'au moins une paroi transparente.

Les premier et deuxième moyens émetteurs/récepteurs optiques pourront être disposés directement en regard l'un de l'autre de part et d'autre d'au moins une paroi transparente.

Alternativement, les premier et deuxième moyens émetteurs/récepteurs optiques pourront être disposés indirectement en regard l'un de l'autre, de part et d'autre d'un épiscope comportant au moins deux surfaces réfléchissantes.

Avantageusement, au moins un moyen émetteur/récepteur optique pourra être disposé à distance de la paroi transparente et se trouvera relié à celle-ci par une fibre optique qui sera fixée à la paroi transparente par un moyen support.

Au moins un moyen émetteur/récepteur optique pourra être solidaire de son boîtier électronique ou intégré à celui-ci.

Des moyens de codage et décodage des signaux pourront être prévus dans chaque boîtier électronique de commande en amont des moyens émetteurs/récepteurs optiques.

Le moyen support pourra comporter une plaque fixée à la paroi et un connecteur permettant de lier de façon étanche la plaque à la fibre.

Au moins un moyen support pourra comporter un moyen de réglage du positionnement de l'extrémité de la fibre optique par rapport à la plaque.

L'invention sera mieux comprise à la lecture de la description qui va suivre de différents modes de réalisation, description faite en référence aux dessins annexés et dans lesquels :
- la figure 1 est un synoptique schématisant un premier mode de réalisation de l'invention,
- la figure 2 schématise un deuxième mode de réalisation de l'invention,
- la figure 3 est un schéma bloc représentant l'électronique associée au dispositif selon l'invention,
- les figures 4a et 4b sont des synoptiques schématisant respectivement un troisième et un quatrième mode de réalisation de l'invention.

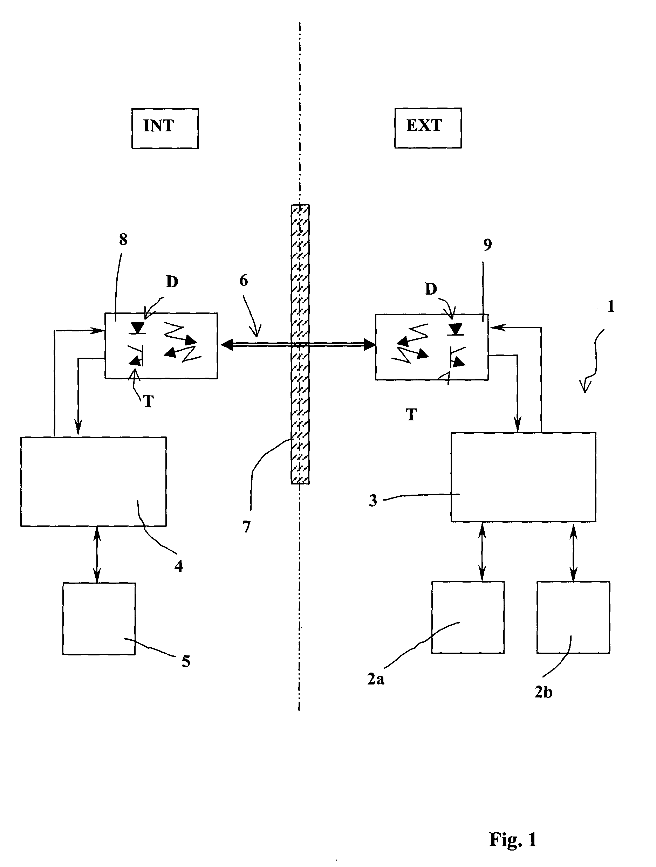

On a schématisé sur la figure 1 un dispositif annexe 1 fixé à l'extérieur (EXT) d'un véhicule (non représenté). Ce dispositif annexe 1 comprend deux organes 2a, 2b raccordés à un boîtier électronique 3 qui commande leur fonctionnement.

Le dispositif annexe pourra être par exemple un dispositif de déminage comprenant deux bobines 2a et 2b.

Le dispositif annexe pourrait être un dispositif de défense active comprenant deux modules de riposte 2a, 2b.

Ce dispositif annexe doit pouvoir être commandé et contrôlé à partir de l'intérieur du véhicule (INT).

A cet effet un autre boîtier électronique 4 (dit de commande) est disposé à l'intérieur du véhicule.

Le boîtier de commande 4 est raccordé éventuellement à un moyen de contrôle 5, lui aussi interne au véhicule, par exemple à un calculateur de bord ou bien à une conduite de tir (dans le cas de la commande de modules de riposte).

Conformément à l'invention le boîtier électronique externe 3 (dit boîtier commandé) peut échanger des données avec le boîtier électronique de commande 4.

La transmission de données se fait sous la forme de signaux lumineux 6 au travers d'au moins une paroi transparente 7.

A cet effet, le dispositif de transmission selon l'invention comporte un premier moyen émetteur/récepteur optique 8, relié au boîtier électronique de commande 4, et qui est disposé à l'intérieur (INT) du véhicule.

Le dispositif comporte également un deuxième moyen émetteur/récepteur optique 9, relié au boîtier électronique commandé 3, et qui est disposé à l'extérieur (EXT) du véhicule.

Les moyens émetteurs/récepteurs optiques sont classiques et bien connus de l'Homme du Métier. Ces moyens comportent généralement une diode émettrice D et un phototransistor récepteur T.

Conformément à l'invention les premier 8 et deuxième 9 moyens émetteurs/récepteurs optiques sont disposés l'un par rapport à l'autre de façon à pouvoir échanger leurs signaux au travers de la paroi transparente 7.

La paroi transparente 7 est un élément du véhicule dont l'invention tire simplement parti. Des parois transparentes (telles que des vitres ou des pare brises) sont présentes sur tous les véhicules pour permettre à l'équipage de voir à l'extérieur.

Ainsi grâce à l'invention il n'est pas nécessaire de pratiquer un perçage au travers des parois du véhicule pour permettre la transmission de données.

Il suffit de positionner d'une façon appropriée les moyens émetteurs/récepteurs internes et externes de part et d'autre d'une paroi transparente séparant l'intérieur et l'extérieur du véhicule pour que la transmission de données se fasse aisément grâce à la voie optique.

Avantageusement les signaux lumineux utilisés seront codés.

Une telle disposition permet de rendre le dispositif insensible aux perturbations extérieures.

Pour permettre un tel codage on prévoira dans les boîtiers électroniques 3 et 4 des moyens de codage de l'émission et de décodage de la réception couplés à des moyens de correction d'erreur.

De tels moyens sont classiques.

Un autre avantage du dispositif de transmission selon l'invention est qu'il n'engendre pas de perturbations électromagnétiques. Par ailleurs la puissance électrique nécessaire à son fonctionnement est réduite et l'émission optique rayonne peu en dehors de la zone d'action nécessaire. Si plusieurs véhicules sont situés à proximité les uns des autres, il n'y a donc pas d'interaction entre différents dispositifs de transmission selon l'invention.

Avantageusement on définira le dispositif de telle sorte que les signaux lumineux soient émis dans une bande de fréquence située en dehors du spectre visible (longueur d'onde de 0,4 micromètres à 0,7 micromètres).

On pourra par exemple utiliser des signaux lumineux émis dans le spectre infra rouge (longueur d'ondes de 0,7 micromètres à 100 micromètres) ou ultra violet (longueur d'ondes de 0,16 micromètres à 0,4 micromètres). Une telle disposition permet de ne pas gêner la vision des personnels embarqués.

Une voie de communication optique présente une grande bande passante (de l'ordre de quelques méga bits par seconde). Il est donc possible avec le dispositif selon l'invention de transmettre de nombreux signaux analogiques ou numériques.

Il est également possible de faire passer par une telle voie optique un signal codé assurant la liaison entre calculateurs informatiques, d'une façon analogue à celle des BUS de transmission bi-filaires.

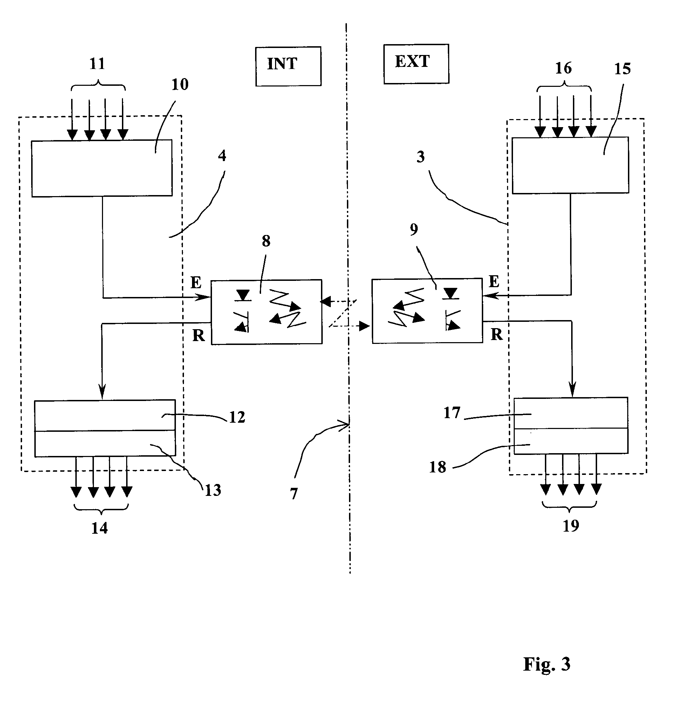

La figure 3 montre ainsi sous forme de schéma bloc l'architecture d'une électronique associée au dispositif selon l'invention.

Le boîtier de commande 4 renferme des moyens 10 assurant le codage de signaux 11 à transmettre au boîtier commandé externe 3.

Ces moyens de codage sont raccordés à la voie d'émission E du premier moyen émetteur/récepteur optique 8.

Le boîtier de commande 4 renferme également des moyens 12 assurant le décodage du signal optique reçu par le premier moyen émetteur/récepteur 8 (voie de réception R). Ces moyens de décodage sont couplés à des moyens de détection et correction d'erreurs 13. Les signaux décodés et corrigés reçus 14 sont transmis ensuite vers des moyens de traitement (non représentés).

Concrètement les moyens de codage 10, de décodage 12 et de détection/correction d'erreurs 13 seront réalisés sous la forme d'algorithmes introduits dans la mémoire d'un micro processeur. Ce dernier pourra avantageusement être incorporé au calculateur de bord ou à un autre calculateur associé à la conduite de tir. De tels moyens de codage et décodage sont classiques dans le domaine de la transmission de données.

D'une façon complètement symétrique, le boîtier commandé 3 renfermera (de préférence sous la forme d'algorithmes mis en mémoire dans un micro processeur) des moyens 15 de codage de signaux 16 à transmettre au boîtier de commande interne 4, ainsi que des moyens 17 de décodage du signal optique reçu par le deuxième moyen émetteur/récepteur 9.

Les moyens de décodage 17 seront couplés à des moyens de détection et correction d'erreurs 18 et les signaux décodés et corrigés reçus 19 seront ensuite transmis vers des moyens de traitement (non représentés).

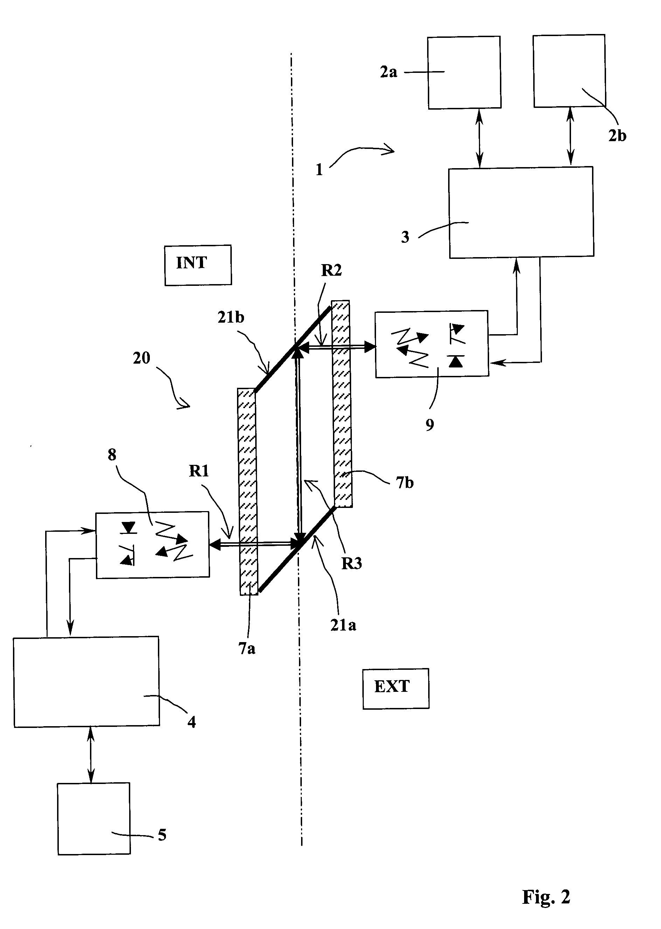

La figure 2 montre un dispositif selon un autre mode de réalisation de l'invention.

Ce dispositif diffère de celui représenté à la figure 1 en ce que les moyens émetteurs/récepteurs optiques 8 et 9 ne sont plus disposés directement en regard l'un de l'autre de part et d'autre d'une paroi transparente mais sont disposés indirectement en regard l'un de l'autre, de part et d'autre d'un épiscope 20.

L'épiscope 20 est représenté ici de façon schématique et ses dimensions et proportions ne correspondent bien entendu pas à celles d'un épiscope réel.

Les épiscopes utilisés dans les véhicules blindés permettent d'observer l'extérieur du véhicule suivant une direction d'observation réelle qui est parallèle à la direction d'observation apparente du regard de l'observateur.

A cet effet un épiscope 20 comporte ainsi deux parois transparentes 7a et 7b et deux surfaces réfléchissantes 21a et 21b. Un rayon lumineux R1 émis par le premier moyen émetteur/récepteur optique 8 est réfléchi sur la surface 21a et renvoyé suivant R3. Le rayon R3 est réfléchi sur la surface 21b et il sort de l'épiscope 20 suivant une direction parallèle à celle du rayon R1 (rayon R2).

Le dispositif de transmission selon l'invention est parfaitement bien adapté à une transmission au travers d'un épiscope Les signaux sont transmis suivant des chemins optiques parfaitement maîtrisés et qui n'entraînent pas de pertes de puissance lumineuse, donc pas de perte de signal.

Il est aisé de positionner les moyens émetteurs /récepteurs 8 et 9 d'une façon assurant l'alignement optique indirect de ces moyens.

Selon un mode de réalisation préféré de l'invention, on pourra chercher à disposer les moyens émetteurs/récepteurs à distance de la ou des parois transparentes 7.

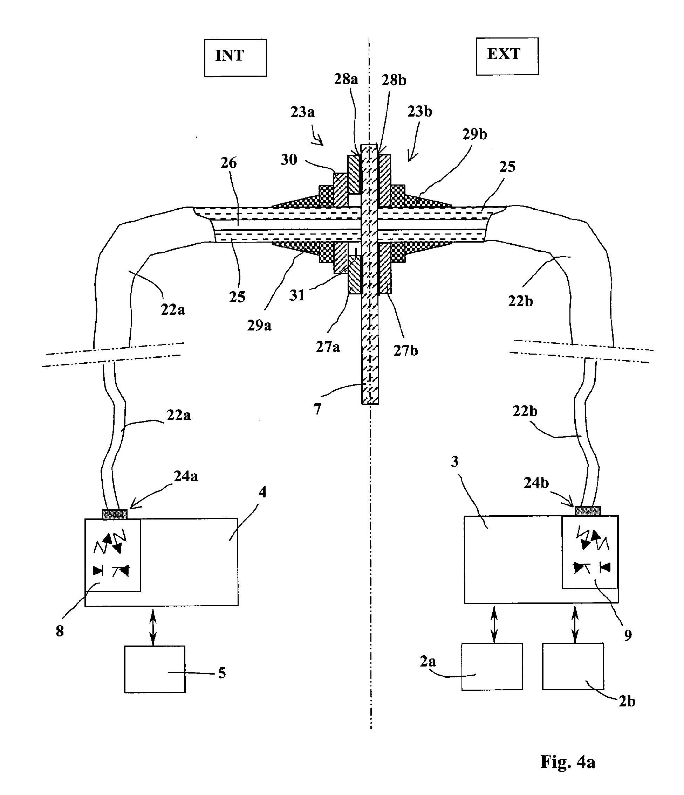

La figure 4a montre ainsi un mode de réalisation analogue à celui de la figure 1, c'est à dire dans lequel il n'y a qu'une seule paroi transparente 7 à traverser avec un signal lumineux.

Cependant ce mode de réalisation diffère des précédents en ce que les moyens 8, 9 émetteurs/récepteurs optiques sont disposés à distance de la paroi transparente 7.

Chaque émetteur/récepteur 8 ou 9 est ainsi relié à la paroi 7 par une fibre optique 22a, 22b dont une extrémité est fixée à la paroi transparente 7 par un moyen support 23a, 23b.

Les autres extrémités des fibres optiques 22a, 22b sont raccordées au moyen émetteur/récepteur associé 8 ou 9 par un connecteur 24a, 24b.

Sur cette figure, pour des raisons de clarté, on a représenté de façon agrandie les extrémités des fibres optiques 22a, 22b disposées au voisinage de la paroi transparente 7. Les fibres optiques ont un diamètre de l'ordre de 0,5 mm avec leur gaine de protection externe 25 qui entoure un coeur 26 d'environ 0,1mm de diamètre. Elles n'occupent donc pratiquement pas de place au niveau de la paroi transparente 7 et ne gênent pas la vision normale au travers de la paroi.

De plus chaque moyen émetteur/récepteur optique 8 et 9 peut être alors intégré à son boîtier électronique 3 ou 4.

La réalisation du dispositif se trouve donc simplifiée. Tous les composants électroniques se trouvent intégrés aux boîtiers dont ne sortent que les fibres optiques 22a, 22b permettant d'assurer la transmission de données. Les fibres optiques sont peu encombrantes et insensibles aux rayonnements électromagnétiques.

Chaque moyen support 23a et 23b comporte une plaque 27a, 27b qui est fixée à la paroi 7 par une couche de colle 28a, 28b.

Le moyen support 23b comporte un connecteur 29b qui permet de lier d'une façon étanche la fibre optique à la plaque 27b.

Le moyen support 23a comporte lui aussi un connecteur 29a assurant une liaison étanche avec la plaque 27a.

Les moyens supports permettent ainsi de fiabiliser la transmission d'information. En effet la portion de la paroi transparente 7 qui se trouve entre les extrémités des fibres 22a, 22b se trouve alors protégée vis à vis de l'humidité et des salissures qui ne risquent plus de venir perturber le passage des signaux optiques d'une fibre à l'autre.

Pour que la transmission des signaux soit assurée, il est essentiel de positionner correctement les extrémités des fibres optiques 22a et 22b en regard l'une de l'autre.

Ce positionnement peut être réalisé lors du collage en mettant en oeuvre un moyen permettant de vérifier le passage des signaux d'une fibre à l'autre.

Avantageusement, il sera utile de prévoir au niveau des moyens support au moins un moyen permettant un réglage fin de la position d'une fibre optique par rapport à l'autre.

Sur la figure 4a on a ainsi représenté, au niveau du moyen support 23a, une plaque intermédiaire 30 qui est fixée d'une façon réglable par rapport à la plaque collée 27a.

Le connecteur 29a est fixé à la plaque intermédiaire 30. Cette plaque intermédiaire devra pouvoir être déplacée par rapport à la plaque 27a suivant au moins deux directions perpendiculaires l'une à l'autre et parallèles à la paroi transparente 7. L'amplitude des déplacements à prévoir pour la plaque 30 est réduite (inférieure au mm suivant les deux directions perpendiculaires).

Afin de permettre un tel déplacement la plaque collée 27a comporte un trou axial 31 de diamètre supérieur à celui de la fibre 22a.

Le réglage sera réalisé d'une façon simple, par exemple par des vis (non représentées) circulant dans des lumières (non représentées) portées par la plaque intermédiaire 30.

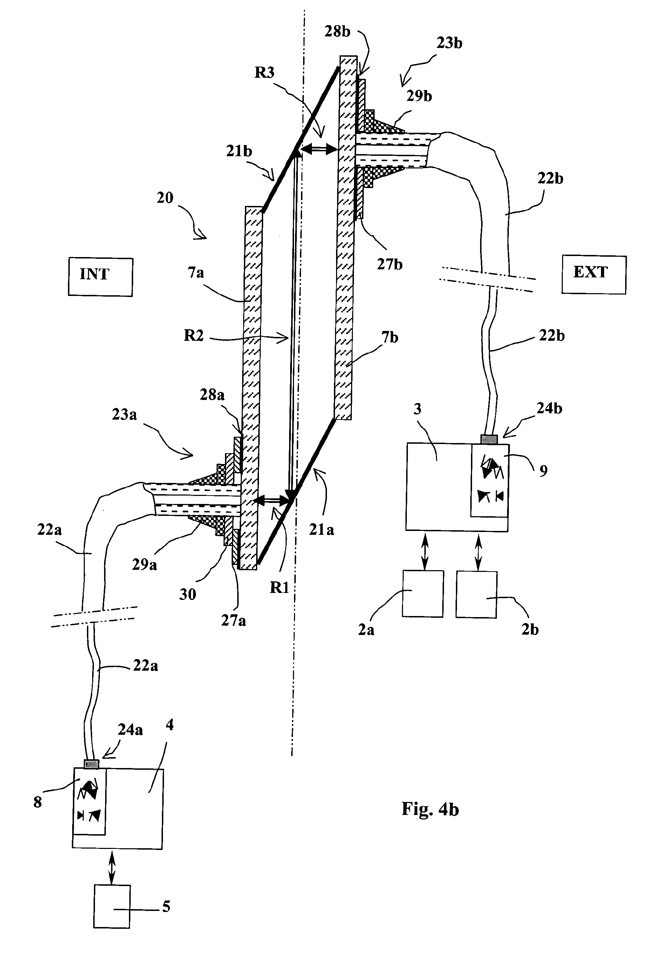

La figure 4b représente un montage analogue à celui de la figure 4a mais dans lequel la paroi 7 est remplacée par un épiscope 20. Le fonctionnement est analogue à celui décrit précédemment en référence à la figure 2.

La paroi transparente 7a porte un moyen support 23a qui comporte là encore une plaque 27a fixée par une couche de colle 28a et un connecteur 29a fixé à une plaque intermédiaire 30 autorisant un réglage fin de la position de la fibre optique 22a.

La paroi transparente 7b porte un moyen support 23b comportant une plaque 27b fixée par une couche de colle 28b et un connecteur 29b.

Il est bien entendu possible dans les modes de réalisation des figures 4a et 4b de prévoir des moyens de réglage au niveau de chacune des fibres optiques 22a, 22b.

Différentes variantes sont possibles sans pour autant sortir du cadre de l'invention.

Il est ainsi possible dans les modes de réalisation des figures 4a et 4b de définir des supports de fibre de structure différente.

On pourra par exemple fixer les fibres optiques non pas par collage mais avec un support portant une ventouse ou bien avec un support mécanique ne traversant pas la paroi transparente mais fixé à demeure sur celle ci comportant des moyens permettant de recevoir un connecteur de fibre optique.

Dans tous les cas l'essentiel est que le moyen support assure l'étanchéité en empêchant l'humidité et les salissures de recouvrir la paroi transparente entre les extrémités des fibres optiques.

A titre de variante, il est également possible pour assurer le pilotage de dispositifs nombreux (déminage, défense active) ou complexes (modules de défense actives multiples) de mettre en oeuvre le dispositif selon l'invention avec plusieurs moyens émetteur / récepteur optiques disposés de part et d'autre d'une même paroi transparente (ou épiscope) ou de part et d'autre de parois ou épiscopes distincts.

D'une façon plus compacte, il est également possible de mettre en oeuvre le dispositif selon l'invention avec plusieurs fibres optiques disposées en regard les unes des autres de part et d'autre d'une paroi ou d'un épiscope. Dans ce cas, les fibres seront avantageusement regroupées en câbles optiques comportant plusieurs fibres optiques.

On prévoira alors des moyens assurant une fixation étanche entre chaque câble et la paroi ou l'épiscope, moyens permettant également le réglage relatif de la position d'un câble par rapport à l'autre et également la position angulaire d'un câble par rapport à l'autre.

L'invention peut bien évidemment être également mise en oeuvre dans un autre type de véhicule qu'un véhicule blindé. On pourra ainsi mettre en oeuvre l'invention dans le domaine naval ou dans celui des aéronefs, que ces véhicules soient civils ou militaires.

## Revendications

1. Procédé de transmission de données entre un boîtier électronique de commande (4) disposé à l'intérieur d'un véhicule et un boîtier électronique commandé (3) disposé à l'extérieur du véhicule, procédé ***caractérisé* en ce que** l'on transmet les données entre les deux boîtiers (3, 4) sous la forme de signaux lumineux au travers d'au moins une paroi transparente (7).

2. Procédé de transmission de données selon la revendication 1, **caractérisé en ce que** les signaux lumineux sont codés.

3. Procédé de transmission de données selon une des revendications 1 ou 2, **caractérisé en ce que** les signaux lumineux sont émis dans une bande de fréquence située en dehors du spectre visible.

4. Dispositif de transmission de données mettant en oeuvre le procédé selon une des revendications 1 à 3, dispositif **caractérisé en ce qu'**il comprend au moins un premier moyen émetteur/récepteur optique (8) relié au boîtier électronique de commande (4) et disposé à l'intérieur du véhicule et au moins un deuxième moyen émetteur/récepteur optique (9) relié au boîtier électronique commandé (3) et disposé à l'extérieur du véhicule, les premier et deuxième moyens émetteurs/récepteurs optiques (8, 9) étant disposés l'un par rapport à l'autre de façon à pouvoir échanger leurs signaux au travers d'au moins une paroi transparente (7, 7a, 7b).

5. Dispositif de transmission de données selon la revendication 4, **caractérisé en ce que** les premier (8) et deuxième (9) moyens émetteurs/récepteurs optiques sont disposés directement en regard l'un de l'autre de part et d'autre d'au moins une paroi transparente (7).

6. Dispositif de transmission de données selon la revendication 4, **caractérisé en ce que** les premier (8) et deuxième (9) moyens émetteurs/récepteurs optiques sont disposés indirectement en regard l'un de l'autre, de part et d'autre d'un épiscope (20) comportant au moins deux surfaces réfléchissantes (21a, 21b).

7. Dispositif de transmission de données selon une des revendications 4 à 6, **caractérisé en ce qu'**au moins un moyen émetteur/récepteur optique (8, 9) est disposé à distance de la paroi transparente (7, 7a, 7b) et se trouve relié à celle-ci par une fibre optique (22a,22b) qui est fixée à la paroi transparente (7, 7a, 7b) par un moyen support (23a, 23b).

8. Dispositif de transmission de données selon la revendication 7, **caractérisé en ce qu'**au moins un moyen émetteur/récepteur optique (8, 9) est solidaire de son boîtier électronique (3, 4) ou intégré à celui-ci.

9. Dispositif de transmission de données selon une des revendications 4 à 8, **caractérisé en ce que** des moyens de codage et décodage (10, 12) des signaux sont prévus dans chaque boîtier électronique de commande (3, 4) en amont des moyens émetteurs/récepteurs optiques (8, 9).

10. Dispositif de transmission de données selon une des revendications 7 à 9, **caractérisé en ce que** le moyen support (23a, 23b) comporte une plaque (27a, 27b) fixée à la paroi (7, 7a, 7b) et un connecteur (29a, 29b) permettant de lier de façon étanche la plaque à la fibre (22a, 22b).

11. Dispositif de transmission de données selon la revendication 10, **caractérisé en ce qu'**au moins un moyen support (23a, 23b) comporte un moyen (30) de réglage du positionnement de l'extrémité de la fibre optique par rapport à la plaque (27a, 27b).
